# EUROPEAN PATENT APPLICATION

(11) **EP 4 390 673 A1**
(43) Date of publication of application: **26.06.2024**
(21) Application number: 22903135.6
(22) Date of filing: 11.11.2022
(51) Int. Cl.: G06F 8/654

(54) **ECU UPGRADE METHOD AND DEVICE, AND READABLE STORAGE MEDIUM**

(30) Priority: 06.12.2021 CN 202111481969
(71) Applicant: BYD Company Limited, Shenzhen, Guangdong 518118 (CN)
(72) Inventor: SHEN, Xiaofeng, Shenzhen, Guangdong 518118 (CN); NIE, Ji, Shenzhen, Guangdong 518118 (CN); CHEN, Lvfen, Shenzhen, Guangdong 518118 (CN)
(74) Representative: Dehns Germany Partnerschaft mbB
(86) International application number: PCT/CN2022/131417
(87) International publication number: WO 2023/103712

(57) **Abstract**

An ECU upgrade method is provided, including: obtaining a set first encapsulation file, where the first encapsulation file encapsulates first vehicle model information and first upgrade content related information corresponding to the first vehicle model information; obtaining the first vehicle model information and the first upgrade content related information based on the first encapsulation file; obtaining first upgrade process related information corresponding to the first vehicle model information from a set memory based on the first vehicle model information; and performing ECU upgrade processing on a vehicle having the first vehicle model information based on the first upgrade process related information and the first upgrade content related information.

## Description

### CROSS-REFERENCE TO RELATED APPLICATIONS

The present disclosure claims priority to Chinese Patent Application No. 202111481969.1, entitled "ECU UPGRADE METHOD AND APPARATUS AND READABLE STORAGE MEDIUM" and filed on December 6, 2021, which is incorporated herein by reference in its entirety.

### FIELD

Embodiments of the present disclosure relate to the field of software upgrade technologies, and more specifically, to an ECU upgrade method and apparatus, and a readable storage medium.

### BACKGROUND

Software is an important component of a vehicle controller. In a development stage, a main engine factory production stage, and an after-sales service stage, a vehicle controller vendor and a main engine factory all have software update and upgrade requirements. For example, software of an electronic control unit (ECU, also known as a driving computer, an in-vehicle computer, and the like) may be upgraded to fix loopholes and add functions.

At present, a corresponding ECU upgrade program may be designed in a targeted manner based on a specific vehicle model and a corresponding upgrade requirement, and ECU upgrade may be performed accordingly for a vehicle of the vehicle model.

However, due to diversity of the vehicle model and continuous changes of the upgrade requirement, a corresponding upgrade program design needs to be performed repeatedly. As a result, an overall upgrade effect is not good.

### SUMMARY

An objective of embodiments of the present disclosure is to provide a new ECU upgrade technical solution.

According to a first aspect of the present disclosure, an ECU upgrade method is provided, including: a set first encapsulation file is obtained, where the first encapsulation file encapsulates first vehicle model information and first upgrade content related information corresponding to the first vehicle model information; the first vehicle model information and the first upgrade content related information are obtained based on the first encapsulation file; first upgrade process related information corresponding to the first vehicle model information is obtained from a set memory based on the first vehicle model information; and ECU upgrade processing is performed on a vehicle having the first vehicle model information based on the first upgrade process related information and the first upgrade content related information.

Optionally, the first upgrade content related information includes upgrade content and an upgrade parameter, the upgrade parameter includes one or more of a physical addressing identifier ID, a functional addressing ID, a response ID, a burning key, and a CAN bus baud rate, and the upgrade content includes one or more of project chip information, project code, and a vehicle model key.

Optionally, that the first upgrade process related information corresponding to the first vehicle model information is obtained from the set memory includes: in a case that a current upgrade mode corresponds to a developer mode, the first upgrade process related information corresponding to the first vehicle model information stored in a local memory is obtained; and in a case that the current upgrade mode does not correspond to the developer mode, the first upgrade process related information corresponding to the first vehicle model information stored in a remote server is obtained, where both the local memory and the remote server store a set mapping relationship between vehicle model information and upgrade process related information.

Optionally, before that the first upgrade process related information corresponding to the first vehicle model information stored in the local memory is obtained, the method further includes: in a case that the current upgrade mode corresponds to the developer mode, the first vehicle model information is obtained in response to a selection operation corresponding to the first vehicle model information; corresponding upgrade process related information is obtained in response to an operation for editing upgrade process related information; and a mapping relationship between the first vehicle model information and the obtained upgrade process related information is constructed, and the constructed mapping relationship is stored into the local memory.

Optionally, that ECU upgrade processing is performed on the vehicle having the first vehicle model information based on the first upgrade process related information and the first upgrade content related information includes: in a case that the current upgrade mode corresponds to the developer mode, ECU upgrade processing is performed on the vehicle having the first vehicle model information in combination with a set test abnormal situation and based on the first upgrade process related information and the first upgrade content related information.

Optionally, after ECU upgrade processing is performed on the vehicle having the first vehicle model information in combination with the set test abnormal situation, the method further includes: a first upgrade result is obtained; whether the first upgrade result is the same as a set upgrade result corresponding to the test abnormal situation is determined; and in a case that the first upgrade result is the same as the set upgrade result, the set mapping relationship stored in the local memory is saved into the remote server.

Optionally, the test abnormal situation includes one or more of an abnormal packet, an error verification code, CAN bus high load, and continuous burning.

Optionally, before that the set first encapsulation file is obtained, the method further includes: in a case that the current upgrade mode corresponds to the developer mode, the first vehicle model information is obtained in response to the selection operation corresponding to the first vehicle model information; the first upgrade content related information is obtained in response to an operation for editing upgrade content related information; and the first vehicle model information and the first upgrade content related information are encapsulated in response to a set encapsulation instruction corresponding to the first vehicle model information to obtain the first encapsulation file.

Optionally, after the first upgrade content related information is obtained, the method further includes: a mapping relationship between the first vehicle model information and the first upgrade content related information is stored into the remote server; the first vehicle model information is obtained in response to the selection operation corresponding to the first vehicle model information; the first upgrade content related information corresponding to the first vehicle model information is obtained from the remote server; and the step of encapsulating the first vehicle model information and the first upgrade content related information is performed in response to a set encapsulation instruction corresponding to the first vehicle model information to obtain the first encapsulation file based on the obtained first upgrade content related information.

According to a second aspect of the present disclosure, an ECU upgrade apparatus is further provided, including: a first obtaining module, configured to obtain a set first encapsulation file, where the first encapsulation file encapsulates first vehicle model information and first upgrade content related information corresponding to the first vehicle model information; a second obtaining module, configured to obtain the first vehicle model information and the first upgrade content related information based on the first encapsulation file; a third obtaining module, configured to obtain first upgrade process related information corresponding to the first vehicle model information from a set memory based on the first vehicle model information; and a processing module, configured to perform ECU upgrade processing on a vehicle having the first vehicle model information based on the first upgrade process related information and the first upgrade content related information.

According to a third aspect of the present disclosure, an ECU upgrade apparatus is further provided, including a memory and a processor, where the memory is configured to store a computer program; and the processor is configured to execute the computer program to implement the method according to the first aspect of the present disclosure.

According to a fourth aspect of the present disclosure, an ECU upgrade system is further provided, including: an upper computer, where the upper computer includes the ECU upgrade apparatus according to the second aspect or third aspect of the present disclosure; and a vehicle, where the vehicle includes an ECU.

According to a fifth aspect of the present disclosure, a computer-readable storage medium is further provided. The computer-readable storage medium stores a computer program, the computer program, when executed by a processor, implements the method according to the first aspect of the present disclosure.

The embodiments of the present disclosure have one beneficial effect that: a set first encapsulation file is obtained, where the first encapsulation file encapsulates first vehicle model information and first upgrade content related information corresponding to the first vehicle model information; the first vehicle model information and the first upgrade content related information are obtained based on the first encapsulation file; first upgrade process related information corresponding to the first vehicle model information is obtained from a set memory based on the first vehicle model information; and ECU upgrade processing is performed on a vehicle having the first vehicle model information based on the first upgrade process related information and the first upgrade content related information. It may be learned that, an encapsulation file that encapsulates vehicle model information and corresponding upgrade content related information may be introduced to cope with a situation of diversified vehicle models and changing upgrade requirements. In this embodiment, based on the encapsulation file, upgrade content related information and upgrade process related information corresponding to the vehicle model may be obtained, so that ECU upgrade is performed on a vehicle of the vehicle model accordingly. The universal upgrade manner is applicable to ECU upgrade purposes under various vehicle models and various upgrade requirements, and there is no need for repeated targeted upgrade program design, so that an overall upgrade effect may be improved.

Through detailed description of exemplary embodiments of the present disclosure with reference to the accompanying drawings, other features and advantages of the embodiments of the present disclosure will become clear.

### BRIEF DESCRIPTION OF THE DRAWINGS

The accompanying drawings that are incorporated in and constitute a part of the specification illustrate embodiments of the present disclosure, and are used to explain the principle of the embodiments of the present disclosure together with the specification.
FIG. 1 is a schematic diagram of a composition structure of an electronic device that can implement an ECU upgrade method according to an embodiment;
FIG. 2 is a schematic flowchart of an ECU upgrade method according to an embodiment;
FIG. 3 is a schematic flowchart of an ECU upgrade method according to another embodiment;
FIG. 4 is a principle block diagram of an ECU upgrade apparatus according to an embodiment;
FIG. 5 is a schematic structural diagram of hardware of an ECU upgrade apparatus according to an embodiment; and
FIG. 6 is a schematic block diagram of an ECU upgrade system according to an embodiment.

### DETAILED DESCRIPTION

The following describes in detail various exemplary embodiments of the present disclosure with reference to the accompanying drawings. It should be noted that unless otherwise specified, the relative deployment, the numerical expression, and values of the components and steps described in the embodiments do not limit the scope of the present disclosure.

In fact, the following descriptions of at least one exemplary embodiment are merely illustrative, and in no way constitute any limitation on the present disclosure and application or use of the present disclosure.

Technologies, methods, and devices known to a person of ordinary skill in the art may not be discussed in detail, but in proper circumstances, the technologies, methods, and devices shall be regarded as a part of the specification.

In all examples that are shown and discussed herein, any specific value should be interpreted only as an example and not as a constraint. Therefore, other examples of the exemplary embodiments may have different values.

It should be noted that: similar reference signs or letters in the following accompanying drawings indicate similar items. Therefore, once an item is defined in one accompanying drawing, the item does not need to be further discussed in the subsequent accompanying drawings.

### <Hardware configuration>

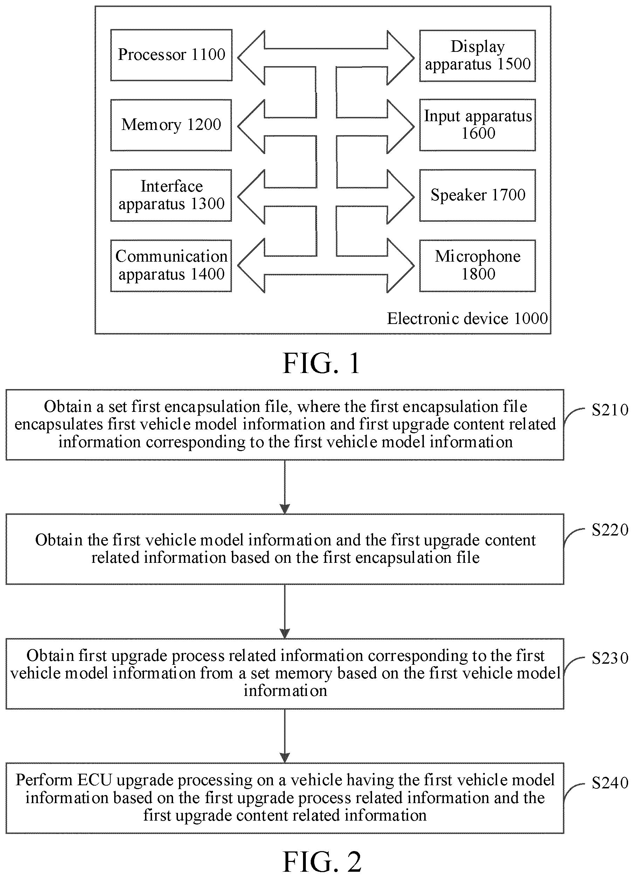

FIG. 1 is a schematic structural diagram of an electronic device 1000 that may be configured to implement the embodiments of the present disclosure.

The electronic device 1000 may be a smartphone, a portable computer, a desktop computer, a tablet computer, a server, or the like, which is not limited herein.

The electronic device 1000 may include, but not limited to, a processor 1100, a memory 1200, an interface apparatus 1300, a communication apparatus 1400, a display apparatus 1500, an input apparatus 1600, a speaker 1700, a microphone 1800, and the like. The processor 1100 may be a central processing unit CPU, a graphics processing unit GPU, a microprocessor MCU, or the like, and is configured to execute a computer program. The computer program may be written by using an instruction set of architectures such as x86, Arm, RISC, MIPS, SSE, and the like. The memory 1200 includes, for example, a read-only memory (ROM), a random access memory (RAM), a non-volatile memory such as a hard disk, and the like. The interface apparatus 1300 includes, for example, a USB interface, a serial interface, a parallel interface, and the like. For example, the communication apparatus 1400 can perform wired communication by using an optical fiber or a cable, or perform wireless communication, specifically, the wireless communication may include WiFi communication, Bluetooth communication, 2G/3G/4G/5G communication, and the like. For example, the display apparatus 1500 is a liquid crystal display screen or a touch display screen. For example, the input apparatus 1600 may include a touch screen, a keyboard, or a somatosensory input. The speaker 1700 is configured to output an audio signal. The microphone 1800 is configured to collect an audio signal.

The memory 1200 of the electronic device 1000 is applied to the embodiments of the present disclosure, and is configured to store a computer program. The computer program is configured to control the processor 1100 to perform operations to implement the method according to the embodiments of the present disclosure. A skilled person may design the computer program based on solutions disclosed in the present disclosure. How the computer program controls the processor to perform operations is known in the art and details are not described herein again. The electronic device 1000 may be installed with an intelligent operating system (for example, systems such as Windows, Linux, Android, and IOS) and application software.

A person skilled in the art should understand that, although a plurality of apparatuses of the electronic device 1000 are shown in FIG. 1, the electronic device 1000 of the embodiments of the present disclosure may only involve some of the apparatuses, for example, only involve the processor 1100 and the memory 1200.

The following describes various embodiments and examples of the present disclosure with reference to the accompanying drawings.

### <Method embodiment>

FIG. 2 is a schematic flowchart of an ECU upgrade method according to an embodiment. An entity for performing this embodiment is, for example, the electronic device 1000 shown in FIG. 1.

Specifically, an ECU upgrade apparatus that performs the ECU upgrade method may be arranged in an upper computer, and a software program that implements the ECU upgrade method may be used as a general-purpose ECU upgrade tool and installed in the upper computer. The upper computer may be a personal computer, and the like.

In this way, the upper computer may perform upgrade processing on an ECU application program of a lower computer such as a vehicle by using the general-purpose ECU upgrade tool, thereby achieving expected upgrade effects such as loophole fixing and function adding. It may be learned that, the introduction of an ECU upgrade function has greatly promoted the development of vehicle ECUs and is an essential tool for the vehicle ECUs.

Specifically, ECU upgrade may be implemented based on controller area network (CAN) bus communication. In this way, in a feasible implementation, the upper computer may implement upgrade processing on a vehicle ECU through a USB-CAN interface card.

A CAN bus protocol is a standard bus protocol for a vehicle computer control system and an embedded industrial control local area network. A vehicle CAN bus belongs to a C-class vehicleuse bus network. The C-class network is used for systems with high requirements on a high speed, real-time performance, and reliability. A general speed thereof is 500 kbps or higher.

Specifically, the vehicle ECU may have a total of 2 CAN IDs for receiving a diagnostic packet, where one is a physical addressing ID and the other is a functional addressing ID. A standard addressing method may be used by an application diagnostic packet.

In this way, data transmission may be performed between the upper computer and the lower computer through a CAN network and based on a communication protocol process. Specifically, data interaction is implemented through a protocol service between the ECU of the lower computer and the general-purpose ECU upgrade tool of the upper computer, to finally complete application program upgrade of the ECU of the lower computer.

Feasibly, the communication protocol on which upgrade processing depends may be an ISO15765 protocol. The communication standard ISO15765 protocol based on a road vehicle controller area network (CAN) diagnostic system is a standard protocol in the vehicle industry.

Specifically, an ISO 15765 architecture may include an application layer (for example, corresponding to a diagnostic application), a network layer, a data link layer, and a physical layer in sequence. Communication at the network layer follows ISO15765-2, and communication at the application layer follows ISO 15765-3.

Specifically, ISO15765-2 may define two communication manners: single-frame transmission and multi-frame transmission. For example, during communication between the lower computer and the ECU, if a quantity of valid data transmitted is less than 8, single-frame transmission may be used; and if a quantity of valid data transmitted is more than or equal to 8, multi-frame transmission may be used, where a first frame, a flow control frame, and a consecutive frame are used in sequence. As an important part of CAN communication software design, the vehicle ECU needs to parse the received packets to obtain a complete diagnostic service.

Specifically, ISO15765-3 may define a refresh program process and a related diagnostic service. The process is used when the lower computer refreshes an in-vehicle ECU.

Specifically, a bootloader may be solidified in the ECU. Bootloader is boot loading, and the bootloader may run before an operating system kernel runs. Based on this, the general-purpose ECU upgrade tool of the upper computer may communicate with the bootloader of the lower computer to complete the upgrade of the ECU in the lower computer.

Based on the foregoing content, as shown in FIG. 2, the ECU upgrade method in this embodiment may include the following step S210 to step S240:
Step S210: A set first encapsulation file is obtained, where the first encapsulation file encapsulates first vehicle model information and first upgrade content related information corresponding to the first vehicle model information.

Specifically, to cope with different vehicle models and changes in requirements, a developer may develop corresponding upgrade content related information. Specifically, the upgrade content related information may include information such as upgrade content and an upgrade parameter.

The developer may combine an original ECU application program file to develop information about the upgrade content and the upgrade parameter. Feasibly, the upgrade parameter may include one or more of a physical addressing ID, a functional addressing ID, a response ID, a burning key, a CAN bus baud rate, and the like. Feasibly, the upgrade content may include information such as one or more of project chip information, project code, a vehicle model key, and the like.

Specifically, considering that vehicle fault diagnosis, as a technology to ensure vehicle safety and maintainability, becomes increasingly important in the development of vehicle electronics, a diagnostic service is widely used in the vehicle ECUs, so that the developer may design the general-purpose ECU upgrade tool based on a diagnostic protocol.

Specifically, the general-purpose ECU upgrade tool in this embodiment may include, for example, a basic upgrade module, a development module, and a test module. These modules are integrated.

The developer may develop information for upgrading based on the development module, and a tasker may upgrade the ECU based on the basic upgrade module. In addition, in a developer mode, an upgrade test may be further performed based on the test module. If a test result satisfies an expectation, a normal mode is entered. When the ECU is upgraded in the normal mode, the test may not be performed.

Specifically, corresponding required functions may be opened to different users based on an authorization technology. For example, in the developer mode, relevant developers may have authorization for the basic upgrade module, the development module, the test module, and an external development configuration folder, and use each module based on the authorization. In the normal mode, the relevant developers may have authorization for the basic upgrade module and use the module based on the authorization, but no longer have authorization for the development module, the test module, and the external development configuration folder. The developer may store developed content into the foregoing external development configuration folder.

This embodiment combines the authorization technology to open corresponding functions for different user groups, ensuring the safety and confidentiality of software to a greatest extent. In this way, this embodiment not only facilitates development and testing by vehicle electronics research and development personnel, simplifies an upgrade operation, and effectively prevents occurrence of erroneous upgrade, but also plays an important role in future system upgrade and maintenance.

Considering that a tasker responsible for an upgrade operation does not need to know specific content of the upgrade content related information, and to facilitate accurate transmission of the upgrade content related information, the upgrade content related information and corresponding vehicle model information may be encapsulated into a whole encapsulation file through a secondary encapsulation tool. In this way, only the encapsulation file needs to be imported to upgrade a corresponding ECU based on the general-purpose ECU upgrade tool.

Based on this, in an embodiment of the present disclosure, before the set first encapsulation file is obtained, the method further includes the following step A1 to step A3:
Step A1: In a case that a current upgrade mode corresponds to a developer mode, the first vehicle model information is obtained in response to a selection operation corresponding to the first vehicle model information.

Specifically, in the developer mode, the developer may develop and design upgrade content related information through the development module of the general-purpose ECU upgrade tool. For example, when a new vehicle model exists or a requirement on an ECU of an existing vehicle model changes, development and design of corresponding upgrade content related information may be performed. In this way, the developer may perform an operation of selecting vehicle model information on an upgrade tool operation interface, so that the ECU upgrade apparatus can obtain the selected vehicle model information accordingly.

Step A2: The first upgrade content related information is obtained in response to an operation for editing upgrade content related information.

In this step, the developer may perform an operation of editing the upgrade content related information, so that the ECU upgrade apparatus can obtain corresponding upgrade content related information, for example, obtain information about the upgrade content and the upgrade parameter accordingly.

Step A3: The first vehicle model information and the first upgrade content related information are encapsulated to obtain the first encapsulation file in response to a set encapsulation instruction corresponding to the first vehicle model information.

Specifically, vehicle model information and corresponding upgrade content related information may be encapsulated together by using a secondary encapsulation tool, and key information may be encrypted during encapsulation to prevent leakage of the key information. For example, a .zck file may be generated through secondary encapsulation.

In this embodiment, the vehicle model information and upgrade content related information may be pre-encapsulated to obtain an encapsulation file, so that ECU upgrade processing may be performed based on the directly imported encapsulation file.

Considering that development of the upgrade content related information may usually be repeated many times, to obtain the encapsulation file based on the latest information, upgrade content related information developed each time may be stored in a remote server for update. When encapsulation processing needs to be performed, related information may be automatically updated and loaded from the remote server to complete an encapsulation operation.

Based on this, in an embodiment of the present disclosure, after the first upgrade content related information is obtained, the method may further include the following step B1 to step B4:
Step B 1: A mapping relationship between the first vehicle model information and the first upgrade content related information is stored into a remote server.

In this step, upgrade content related information developed by each developer is stored into the remote server in real time, to achieve real-time and unified update of information.

Step B2: The first vehicle model information is obtained in response to the selection operation corresponding to the first vehicle model information.

Specifically, in the developer mode, the developer may perform an encapsulation operation through the development module of the general-purpose ECU upgrade tool. For example, the developer may perform an operation of selecting vehicle model information on an upgrade tool operation interface, so that the ECU upgrade apparatus can obtain the selected vehicle model information accordingly.

Step B3: The first upgrade content related information corresponding to the first vehicle model information is obtained from the remote server.

In this step, upgrade content related information corresponding to a selected vehicle model may be automatically updated and loaded from the remote server for encapsulation use.

Step B4: Based on the obtained first upgrade content related information, a step of encapsulating the first vehicle model information and the first upgrade content related information in response to the set encapsulation instruction corresponding to the first vehicle model information to obtain the first encapsulation file is performed.

Specifically, based on the automatically loaded upgrade content related information, encapsulation processing may be performed to obtain an encapsulation file. The obtained encapsulation file may be used in an ECU upgrade processing process in the developer mode and in the normal mode.

Step S220: The first vehicle model information and the first upgrade content related information are obtained based on the first encapsulation file.

In this step, for the imported encapsulation file, information decapsulation may be performed on the encapsulation file through the basic upgrade module of the general-purpose ECU upgrade tool to obtain the vehicle model information and the upgrade content related information.

Step S230: First upgrade process related information corresponding to the first vehicle model information is obtained from a set memory based on the first vehicle model information.

Specifically, the upgrade process related information may include information such as an upgrade process and an upgrade key.

In this step, the upgrade process related information corresponding to the vehicle model information may be obtained from the set memory through the basic upgrade module of the general-purpose ECU upgrade tool.

Specifically, a general database of the upgrade process related information is stored in the set memory, including, for example, a general database of upgrade processes and a general database of key algorithms for various vehicle models. In a feasible implementation, these general databases may be downloaded from the set memory, and information about a corresponding upgrade process and an upgrade key may be queried through the vehicle model information obtained by decapsulation, so that upgrade processing may be performed accordingly.

Specifically, when a new vehicle model exists or a requirement on an ECU of an existing vehicle model changes, the developer may develop and design upgrade process related information through the development module of the general-purpose ECU upgrade tool.

To facilitate execution of upgrade processing in different stages, upgrade process related information in different stages may be stored in different memories. Preferably, in the developer mode, the upgrade process related information may be stored in a local memory, such as a set external folder, and in the normal mode, the upgrade process related information may be stored in a remote server.

In this way, in an embodiment of the present disclosure, a step of obtaining the first upgrade process related information corresponding to the first vehicle model information from the set memory may include the following step C1 or step C2:
Step C 1: In a case that a current upgrade mode corresponds to a developer mode, the first upgrade process related information corresponding to the first vehicle model information stored in a local memory is obtained. The local memory stores a set mapping relationship between vehicle model information and upgrade process related information.

Specifically, in the developer mode, the set mapping relationship may be downloaded from the local memory, such as from the set external folder, and then corresponding upgrade process related information may be queried based on the vehicle model information obtained by decapsulation, so that ECU upgrade processing in the developer mode may be performed accordingly.

Based on this, in an embodiment of the present disclosure, before the first upgrade process related information corresponding to the first vehicle model information stored in the local memory is obtained, the method may further include the following step D1 to step D3:
Step D 1: In a case that the current upgrade mode corresponds to the developer mode, the first vehicle model information is obtained in response to a selection operation corresponding to the first vehicle model information.

Specifically, in the developer mode, the developer may develop and design upgrade process related information through the development module of the general-purpose ECU upgrade tool. For example, when a new vehicle model exists or a requirement on an ECU of an existing vehicle model changes, development and design of corresponding upgrade process related information may be performed. In this way, the developer may perform an operation of selecting vehicle model information on an upgrade tool operation interface, so that the ECU upgrade apparatus can obtain the selected vehicle model information accordingly.

Step D2: Corresponding upgrade process related information is obtained in response to an operation for editing upgrade process related information.

In this step, the developer may perform an operation of editing the upgrade process related information, so that the ECU upgrade apparatus can obtain corresponding upgrade process related information, for example, obtain information about the upgrade process and the upgrade key accordingly.

Step D3: A mapping relationship between the first vehicle model information and the obtained upgrade process related information is constructed, and the constructed mapping relationship is stored into the local memory.
To facilitate a smooth progress of ECU upgrade processing in the developer mode, the upgrade process related information obtained through editing may be stored in the local memory.

For example, considering that the general-purpose ECU upgrade tool of the upper computer mainly communicates with the bootloader of the lower computer to complete ECU upgrade working, in the developer mode, a bootloader engineer of the lower computer may edit ECU upgrade process information and a key algorithm of a new vehicle model in an external folder based on a configuration file format specification, and store an editing result in the external folder. In this way, during a corresponding upgrade process, the upgrade process related information is obtained from the external configuration folder for upgrade processing. This implementation may facilitate the development and debugging working of the bootloader engineer.

It may be learned that, in the developer mode, the developer mainly edit a process file and a key algorithm file to complete ECU upgrade and development working of a new vehicle model.

In addition, when the ECU upgrade working in the developer mode is successfully completed, and ECU upgrade working in the normal mode may be performed, that is, after a configuration file of the developed upgrade process related information is debugged and finalized, the configuration file may be uploaded to a general database in the remote server to complete the development and design of an upgrade tool of the new vehicle model. Based on this, ECU upgrade working in the normal mode may be performed.

Step C2: In a case that the current upgrade mode does not correspond to the developer mode, the first upgrade process related information corresponding to the first vehicle model information stored in a remote server is obtained. The remote server stores a set mapping relationship between vehicle model information and upgrade process related information.

Specifically, in the normal mode, the set mapping relationship may be downloaded from the remote server, and then corresponding upgrade process related information may be queried based on the vehicle model information obtained by decapsulation, so that ECU upgrade processing in the normal mode may be performed accordingly.

Step S240: ECU upgrade processing is performed on a vehicle having the first vehicle model information based on the first upgrade process related information and the first upgrade content related information.

Specifically, after extracting the upgrade process related information and obtaining the upgrade content related information, the general-purpose ECU upgrade tool may automatically configure an upgrade communication flow, and perform ECU upgrade processing accordingly to update and upgrade an application program of the ECU.

Through testing, based on the upgrade method provided in this embodiment, matching with different vehicle models may be completed by importing different target files, and upgrade content may be successfully downloaded to the vehicle ECU based on a corresponding upgrade process. After the download is completed, the ECU is powered on again, so that a new program may be loaded and run smoothly.

It may be learned from the above that, this embodiment provides an ECU upgrade method. In the method, a set first encapsulation file is obtained, where the first encapsulation file encapsulates first vehicle model information and first upgrade content related information corresponding to the first vehicle model information; the first vehicle model information and the first upgrade content related information are obtained based on the first encapsulation file; first upgrade process related information corresponding to the first vehicle model information is obtained from a set memory based on the first vehicle model information; and ECU upgrade processing is performed on a vehicle having the first vehicle model information based on the first upgrade process related information and the first upgrade content related information. It may be learned that, an encapsulation file that encapsulates vehicle model information and corresponding upgrade content related information may be introduced to cope with a situation of diversified vehicle models and changing upgrade requirements. In this embodiment, based on the encapsulation file, upgrade content related information and upgrade process related information corresponding to the vehicle model may be obtained, so that ECU upgrade is performed on a vehicle of the vehicle model accordingly. The universal upgrade manner is applicable to ECU upgrade purposes under various vehicle models and various upgrade requirements, and there is no need for repeated targeted upgrade program design, so that an overall upgrade effect may be improved.

As mentioned above, a test may be performed when ECU upgrade processing is performed in the developer mode. If the test is passed, ECU upgrade processing in the normal mode may be performed.

Based on this, in an embodiment of the present disclosure, step S240 of performing ECU upgrade processing on a vehicle having the first vehicle model information based on the first upgrade process related information and the first upgrade content related information may include the following steps:

In a case that the current upgrade mode corresponds to the developer mode, ECU upgrade processing is performed on the vehicle having the first vehicle model information in combination with a set test abnormal situation and based on the first upgrade process related information and the first upgrade content related information.

Specifically, an ECU upgrade test in the developer mode may be performed based on the test module of the general-purpose ECU upgrade tool. The test module may simulate an abnormal situation in each process of ECU upgrade, and based on this, perform a test on operation of an ECU including a bootloader program.

Feasibly, the test abnormal situation may include situations such as one or more of an abnormal packet, an error verification code, CAN bus high load, and continuous burning.

Correspondingly, after ECU upgrade processing on the vehicle having the first vehicle model information in combination with a set test abnormal situation, the method may further include the following step E1 to step E3:

Step E1: A first upgrade result is obtained.

Since the upgrade test is performed under the set test abnormal situation, a corresponding upgrade result may be obtained, so that the upgrade result may be compared with an expected upgrade result to determine whether the upgrade process is performed as expected.

Step E2: Whether the first upgrade result is the same as a set upgrade result corresponding to the test abnormal situation is determined.

In this step, the consistency between an actual upgrade result and the expected upgrade result may be determined. If information developed by the developer is correct, a consistent result may usually be obtained. On the contrary, the developer may adjust the development information as required.

Step E3: In a case that the first upgrade result is the same as the set upgrade result, the set mapping relationship stored in the local memory is saved into the remote server.

In this step, after the consistent result is obtained, the information developed by the developer may be stored in the remote server, so that when ECU is upgraded in the normal mode, the corresponding information may be obtained from the remote server.

Different from the developer mode, an upgrade test does not need to be performed when the ECU is upgraded in the normal mode. In this way, in the normal mode, as described in the foregoing step S240, upgrade processing is directly performed based on the upgrade process related information and the upgrade content related information.

It may be learned from the above that, the ECU upgrade method provided in this embodiment may have at least the following characteristics:

### 1. Applicable to various vehicle models.

For an existing targeted upgrade tool, each vehicle model corresponds to at least one upgrade tool. As a result, development and design working is cumbersome and requires a lot of repetitive working, which has high development costs and a long development cycle, and is not conducive to effective application of resources.

However, this embodiment provides a general-purpose ECU upgrade tool that may be used for almost all vehicle models designed in compliance with the ISO15765 protocol. In this way, repeated development working of the ECU upgrade tool is no longer required, which undoubtedly reduces processes and various costs consumed for updating application software.

### 2. An upgrade process is flexible and secondary expansion may be performed.

For an existing targeted upgrade tool, upgrade process and parameter information are solidified, so that during an entire project, when the upgrade process information or parameter information needs to be changed due to allocation by the entire system or changes in customer requirements, software source code needs to be modified and re-released. In addition, after many times of debugging, a response time cycle is long in coordinating with the bootloader of the lower computer or another part of a system test, making it difficult to adapt to a new change.

The general-purpose ECU upgrade tool provided in this embodiment has a characteristic of customization, a user interface language, a tool, and an upgrade process dedicated to an upgraded ECU device can be customized based on upgrade requirements, so that all upgrade functions defined in a requirement document of the upgraded ECU device may be implemented.

### 3. The complexity of a software upgrade operation is low.

For an existing targeted upgrade tool, when ECUs of different vehicle models are upgraded, different tools need to be switched, and a user needs to input upgrade information, making the operation more complicated.

When the general-purpose ECU upgrade tool provided in this embodiment uses its ordinary upgrade module to perform an upgrade operation, one-click upgrade may be completed by importing only an encapsulated file.

### 4. Greater functional coverage.

For an existing targeted upgrade tool, due to factors such as omissions in a project plan or preliminary planning of a user, some auxiliary analysis and testing functions, such as local data storage and use of diversified CAN devices, are missing, which is not conducive to more efficient system project testing.

However, the general-purpose ECU upgrade tool provided in this embodiment has strong functional coverage and integrates upgrade, testing, and development functions, making the tool have good human-computer interaction. Especially, when the upgrade tool is used by a bootloader development engineer of a lower computer, this tool can be used conveniently and quickly to perform process configuration flexibly to complete the development working of the lower computer.

### 5. Convenient development.

The general-purpose ECU upgrade tool provided in this embodiment provides maximum convenience for a bootloader developer of the lower computer to perform personalized configuration, saving development working of the upgrade tool.

However, for an existing targeted upgrade tool, when a new project is imported, a developer needs to develop a project from scratch, namely, starting from tool design, coding implementation to debugging and releasing, the development process is time-consuming and laborious.

### 6. Reduce an operation level of a user and facilitate management.

For an existing targeted upgrade tool, a technician needs to pay attention to the accuracy of an upgrade operation and the accuracy of an upgrade tool at a workstation, and also needs to manage each upgrade tool. An upgrade operation error includes inaccurate inputted upgrade information during the operation; and an error of the upgrade tool lies in that upgrade requirements of different vehicle models leads to an increase in the difficulty in managing the upgrade tool. For some serious erroneous upgrade situations, it is even necessary to disassemble a part from an entire vehicle and then update a program through a debugging port, which increases a workload and easily causes damage to the vehicle itself. Furthermore, upgrade of different vehicle models requires use of different upgrade tools. ECUs of the same vehicle model also require different versions of tools at various stages, which leads to an increase in the difficulty in managing the upgrade tools, and various departments of a main engine factory also increase errors during use.

The general-purpose ECU upgrade tool provided in this embodiment is suitable for a wide range of vehicle models, and the software is easy to operate and has a single version, which greatly reduces requirements on the operation level of the user. When the general-purpose ECU upgrade tool is used, the latest and most complete information may be updated to a local by being connected to a remote server, avoiding complicated version management of the ECU upgrade tool.

### 7. Good user experience.

A design manner of the general-purpose ECU upgrade tool provided in this embodiment depends on a user-centered design principle, and considers the user experience, that is, some aspects such as a response time of a system, an error message processing manner, a user command manner, and a user interface language. This tool has strong customization and scalability, which greatly improves its flexibility in dealing with situations such as development, debugging, troubleshooting, maintenance, and requirement changes, and effectively meets user requirements. Based on this general-purpose ECU upgrade tool, not only the working efficiency is improved, but also more manpower and material resources are saved.

### 8. Safe and reliable.

The general-purpose ECU upgrade tool in this embodiment may include a basic upgrade module, a development module, and a test module. These modules are integrated. This embodiment combines the authorization technology to open corresponding functions for different user groups, ensuring the safety and confidentiality of software to a greatest extent. In this way, this embodiment not only facilitates development and testing by vehicle electronics research and development personnel, simplifies an upgrade operation, and effectively prevents occurrence of erroneous upgrade, but also plays an important role in future system upgrade and maintenance.

### 9. Meet market demand.

This embodiment provides a general-purpose and comprehensive ECU upgrade tool that adapts to the development of vehicle diagnostic technologies. This tool conforms to the development of vehicle diagnostic technologies and caters to a market development trend, which has far-reaching and important significance and value to the reliability, accuracy, and stability of the vehicle ECU upgrade tool.

### 10. Facilitate product development.

This embodiment provides a general-purpose ECU upgrade tool that is highly flexible, safe, and reliable. The main engine factory may use the general-purpose ECU upgrade tool to quickly expand a new set of upgrade process specifications. By applying this tool to different controllers of different vehicle models, a situation of repeated development from scratch between the main engine factory and major customers may be avoided. It not only reduces product development difficulty, a development cycle, and development and management costs, but also improves product development efficiency, and also improves product quality and stability.

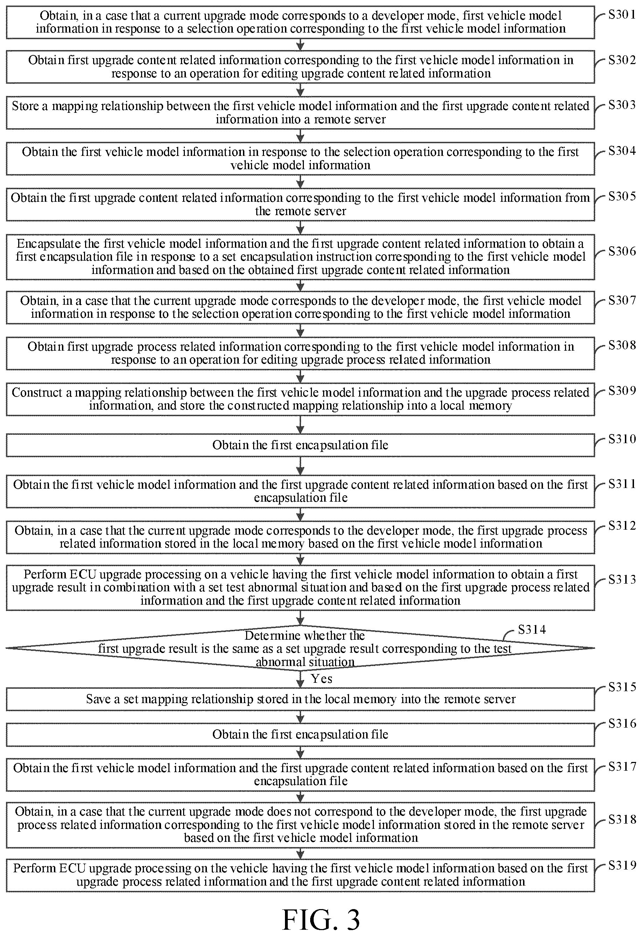

FIG. 3 is a schematic flowchart of an ECU upgrade method according to an embodiment. An entity for performing this embodiment may be the electronic device 1000 shown in FIG. 1.

As shown in FIG. 3, the method in this embodiment may include the following step S301 to step S319:
Step S301: In a case that a current upgrade mode corresponds to a developer mode, first vehicle model information is obtained in response to a selection operation corresponding to the first vehicle model information.
Step S302: First upgrade content related information corresponding to the first vehicle model information is obtained in response to an operation for editing upgrade content related information.
Step S303: A mapping relationship between the first vehicle model information and the first upgrade content related information is stored into a remote server.
Step S304: The first vehicle model information is obtained in response to the selection operation corresponding to the first vehicle model information.
Step S305: The first upgrade content related information corresponding to the first vehicle model information is obtained from the remote server.
Step S306: The first vehicle model information and the first upgrade content related information are encapsulated to obtain a first encapsulation file in response to a set encapsulation instruction corresponding to the first vehicle model information and based on the obtained first upgrade content related information.
Step S307: In a case that the current upgrade mode corresponds to the developer mode, the first vehicle model information is obtained in response to a selection operation corresponding to the first vehicle model information.
Step S308: First upgrade process related information corresponding to the first vehicle model information is obtained in response to an operation for editing upgrade process related information.
Step S309: A mapping relationship between the first vehicle model information and the upgrade process related information is constructed, and the constructed mapping relationship is stored into a local memory.
Step S310: The first encapsulation file is obtained.
Step S311: The first vehicle model information and the first upgrade content related information are obtained based on the first encapsulation file.
Step S312: In a case that the current upgrade mode corresponds to the developer mode, the first upgrade process related information stored in the local memory is obtained based on the first vehicle model information.
Step S313: ECU upgrade processing is performed on a vehicle having the first vehicle model information to obtain a first upgrade result in combination with a set test abnormal situation and based on the first upgrade process related information and the first upgrade content related information.
Step S314: Whether the first upgrade result is the same as a set upgrade result corresponding to the test abnormal situation is determined.
Step S315: In a case that the first upgrade result is the same as the set upgrade result, the set mapping relationship stored in the local memory is saved into the remote server.
Step S316: The first encapsulation file is obtained.
Step S317: The first vehicle model information and the first upgrade content related information are obtained based on the first encapsulation file.
Step S318: In a case that the current upgrade mode does not correspond to the developer mode, the first upgrade process related information corresponding to the first vehicle model information stored in the remote server is obtained based on the first vehicle model information.
Step S319: ECU upgrade processing is performed on a vehicle having the first vehicle model information based on the first upgrade process related information and the first upgrade content related information.

### <Device embodiment>

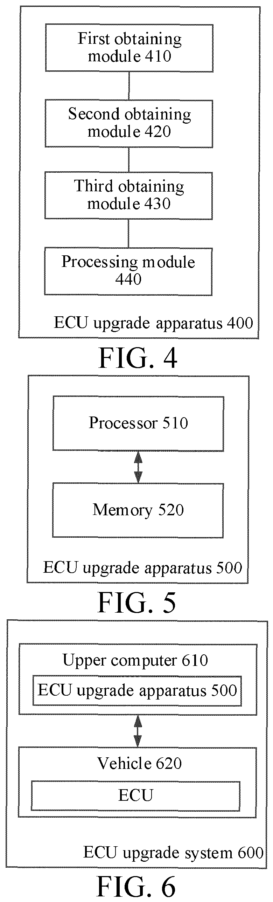

FIG. 4 is a principle block diagram of an ECU upgrade apparatus 400 according to an embodiment. As shown in FIG. 4, the ECU upgrade apparatus 400 may include a first obtaining module 410, a second obtaining module 420, a third obtaining module 430, and a processing module 440.

The first obtaining module 410 is configured to obtain a set first encapsulation file, where the first encapsulation file encapsulates first vehicle model information and first upgrade content related information corresponding to the first vehicle model information. The second obtaining module 420 is configured to obtain the first vehicle model information and the first upgrade content related information based on the first encapsulation file. The third obtaining module 430 is configured to obtain first upgrade process related information corresponding to the first vehicle model information from a set memory based on the first vehicle model information. The processing module 440 is configured to perform ECU upgrade processing on a vehicle having the first vehicle model information based on the first upgrade process related information and the first upgrade content related information.

The ECU upgrade apparatus 400 may be the electronic device 1000 as shown in FIG. 1.

In this embodiment, a set first encapsulation file is obtained, where the first encapsulation file encapsulates first vehicle model information and first upgrade content related information corresponding to the first vehicle model information; the first vehicle model information and the first upgrade content related information are obtained based on the first encapsulation file; first upgrade process related information corresponding to the first vehicle model information is obtained from a set memory based on the first vehicle model information; and ECU upgrade processing is performed on a vehicle having the first vehicle model information based on the first upgrade process related information and the first upgrade content related information. It may be learned that, an encapsulation file that encapsulates vehicle model information and corresponding upgrade content related information may be introduced to cope with a situation of diversified vehicle models and changing upgrade requirements. In this embodiment, based on the encapsulation file, upgrade content related information and upgrade process related information corresponding to the vehicle model may be obtained, so that ECU upgrade is performed on a vehicle of the vehicle model accordingly. The universal upgrade manner is applicable to ECU upgrade purposes under various vehicle models and various upgrade requirements, and there is no need for repeated targeted upgrade program design, so that an overall upgrade effect may be improved.

In an embodiment of the present disclosure, the third obtaining module 430 is configured to obtain, in a case that a current upgrade mode corresponds to a developer mode, the first upgrade process related information corresponding to the first vehicle model information stored in a local memory; and in a case that the current upgrade mode does not correspond to the developer mode, the first upgrade process related information corresponding to the first vehicle model information stored in a remote server is obtained, where both the local memory and the remote server store a set mapping relationship between vehicle model information and upgrade process related information.

In an embodiment of the present disclosure, the ECU upgrade apparatus 400 may further include: a module configured to obtain, in a case that the current upgrade mode corresponds to the developer mode, the first vehicle model information in response to a selection operation corresponding to the first vehicle model information; a module configured to obtain corresponding upgrade process related information in response to an operation for editing the upgrade process related information; and a module configured to construct a mapping relationship between the first vehicle model information and the obtained upgrade process related information, and store the constructed mapping relationship into the local memory.

In an embodiment of the present disclosure, the processing module 440 is configured to perform, in a case that the current upgrade mode corresponds to the developer mode, ECU upgrade processing on a vehicle having the first vehicle model information in combination with a set test abnormal situation based on the first upgrade process related information and the first upgrade content related information.

The ECU upgrade apparatus 400 may further include: a test module, configured to obtain a first upgrade result; determine whether the first upgrade result is the same as a set upgrade result corresponding to the test abnormal situation; and save, in a case that the first upgrade result is the same as the set upgrade result, the set mapping relationship stored in the local memory into the remote server.

In an embodiment of the present disclosure, the ECU upgrade apparatus 400 may further include: a module configured to obtain, in a case that the current upgrade mode corresponds to the developer mode, the first vehicle model information in response to a selection operation corresponding to the first vehicle model information; a module configured to obtain the first upgrade content related information in response to an operation for editing upgrade content related information; and a module configured to encapsulate the first vehicle model information and the first upgrade content related information in response to a set encapsulation instruction corresponding to the first vehicle model information, to obtain the first encapsulation file.

In an embodiment of the present disclosure, the ECU upgrade apparatus 400 may further include: a module configured to store the mapping relationship between the first vehicle model information and the first upgrade content related information into the remote server; a module configured to obtain the first vehicle model information in response to the selection operation corresponding to the first vehicle model information; and a module configured to obtain the first upgrade content related information corresponding to the first vehicle model information from the remote server.

FIG. 5 is a schematic structural diagram of hardware of an ECU upgrade apparatus 500 according to an embodiment.

As shown in FIG. 5, the ECU upgrade apparatus 500 includes a processor 510 and a memory 520. The memory 520 is configured to store an executable computer program, and the processor 510 is configured to perform a method according to any of the foregoing method embodiments based on the control of the computer program.

The ECU upgrade apparatus 500 may be the electronic device 1000 as shown in FIG. 1.

The modules of the foregoing ECU upgrade apparatus 500 may be implemented by the processor 510 in this embodiment executing the computer program stored in the memory 520, or may be implemented by another circuit structure. This is not limited herein.

In addition, this embodiment further provides an ECU upgrade system. As shown in the figure, FIG. 6 is a principle block diagram of an ECU upgrade system 600 according to an embodiment. The ECU upgrade system 600 includes an upper computer 610 and a vehicle 620, where the upper computer 610 includes the ECU upgrade apparatus according to any embodiment of the present disclosure; and the vehicle 620 includes an ECU.

In this way, the upper computer may perform upgrade processing on the ECU of the vehicle based on the ECU upgrade apparatus included in the upper computer. The vehicle may be a vehicle in any vehicle model.

The present disclosure may be a system, a method, and/or a computer program product. The computer program product may include a computer-readable storage medium, storing computer-readable program instructions used for causing a processor to perform the aspects of the present disclosure.

The computer-readable storage medium may be a physical device that can retain and store an instruction used by an instruction-executing device. The computer-readable storage medium may be, for example, but not limited to, an electrical storage device, a magnetic storage device, an optical storage device, an electromagnetic storage device, a semiconductor storage device, or any appropriate combination of the above. In a more specific example (a non-exhaustive list), the computer-readable storage medium comprises a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical coding device such as a punched card or protrusion in a groove in which instructions are stored, and any appropriate combination of the above. The computer-readable storage medium as used here is not explained as a transient signal itself, such as a radio wave or other electromagnetic waves propagated freely, an electromagnetic wave propagated through a waveguide or other transmission media (e.g., a light pulse propagated through an optical fiber cable), or an electrical signal transmitted over a wire.

The computer-readable program instructions described herein may be downloaded to various computing/processing devices from a computer-readable storage medium or to an external computer or external storage device via a network, for example, the Internet, a local area network, a wide area network and/or a wireless network. The network may include copper transmission cables, optical fiber transmission, wireless transmission, routers, firewalls, switches, gateway computers and/or edge servers. A network adapter card or network interface in each computing/processing device receives computer-readable program instructions from the network and forwards the computer-readable program instructions for storage in a computer-readable storage medium within the various computing/processing devices.

The computer program instructions for performing operations of the present disclosure may be assembly instructions, instruction set architecture (ISA) instructions, machine instructions, machine-related instructions, microcode, firmware instructions, status setting data, or source code or object code written in any combination of one or more programming languages. The programming languages includes object-oriented programming languages such as Smalltalk and C++, and conventional procedural programming languages such as "C" language or similar programming languages. The computer-readable program instructions may be executed entirely on a computer of a user, partly on the computer of the user, as a stand-alone software package, partly on the computer of the user and partly on a remote computer, or entirely on the remote computer or a server. For the case involving a remote computer, the remote computer may be connected to a computer of a user through any type of network including a local area network (LAN) or wide area network (WAN), or may be connected to an external computer (for example, through the Internet by using an Internet service provider). In some embodiments, an electronic circuit, such as a programmable logic circuit, a field programmable gate array (FPGA), or a programmable logic array (PLA), is customized by using status information of the computer-readable program instructions. The electronic circuit may execute the computer-readable program instructions to implement various aspects of the present disclosure.

Aspects of the present disclosure are described herein with reference to flowcharts and/or block diagrams of methods, apparatus (systems), and computer program products according to the embodiments of the present disclosure. It should be understood that each block of the flowcharts and/or block diagrams, and combinations of blocks in the flowcharts and/or block diagrams, may be implemented by the computer-readable program instructions.

These computer-readable program instructions may be provided to a processor of a general computer, special computer, or other programmable data processing apparatus, so that a machine is produced, and such that the instructions, when executed by the processor of the computer or other programmable data processing apparatus, produce means for implementing the functions/acts in one or more blocks of the flowcharts and/or block diagrams. These computer-readable program instructions may further be stored in a computer-readable storage medium. These instructions cause a computer, a programmable data processing apparatus, and/or another device to work in a particular manner. In this way, a computer-readable medium having instructions stored thereon includes an artifact that includes instructions for implementing various aspects of the functions/acts specified in one or more blocks of the flowcharts and/or block diagrams.

The computer-readable program instructions may also be loaded onto a computer, another programmable data processing apparatus, or another device to cause a series of operational steps to be performed on the computer, another programmable data apparatus, or another device to produce a computer implemented process such that the instructions which execute on the computer, another programmable data processing apparatus, or another device for implementing the functions/acts specified in one or more blocks of the flowcharts and/or block diagrams.

The flowcharts and block diagrams in the accompanying drawings illustrate the architecture, functionality, and operation of possible implementations of systems, methods, and computer program products according to various embodiments of the present disclosure. In this regard, each block in a flowchart or a block diagram may represent a module, a program segment, or a part of instructions. The module, the program segment, or the part of instructions include one or more executable instructions used for implementing specified logic functions. In some implementations used as substitutes, functions marked in blocks may alternatively occur in a sequence different from that marked in an accompanying drawing. For example, two consecutive blocks may actually be performed basically in parallel, and sometimes the two consecutive blocks may be performed in a reverse sequence. This is determined according to a related function. It should be further noted that, each block in the block diagram and/or the flowchart, and a combination of blocks in the block diagram and/or the flowchart may be implemented by using a dedicated hardware-based system that performs a specified function or act, or may be implemented by using a combination of dedicated hardware and computer instructions. It may be known by a person skilled in the art that, implementations through hardware, software, and a combination of software and hardware are all equivalent.

The embodiments of the present disclosure are described above, and the foregoing descriptions are exemplary but not exhaustive and are not limited to the disclosed embodiments. Without departing from the scope and spirit of the described embodiments, many modifications and variations are apparent to a person of ordinary skill in the technical field. The selected terms used herein is intended to best explain the principles of the embodiments, practical applications, or improvements of technologies in the market, or to enable other persons of ordinary skill in the technical field to understand the embodiments disclosed herein. The scope of the present disclosure is limited by the appended claims.

## Claims

1. An ECU upgrade method, comprising:
obtaining a set first encapsulation file, the first encapsulation file encapsulating first vehicle model information and first upgrade content related information corresponding to the first vehicle model information;
obtaining the first vehicle model information and the first upgrade content related information based on the first encapsulation file;
obtaining first upgrade process related information corresponding to the first vehicle model information from a set memory based on the first vehicle model information; and
performing ECU upgrade processing on a vehicle having the first vehicle model information based on the first upgrade process related information and the first upgrade content related information.

2. The method according to claim 1, wherein the first upgrade content related information comprises upgrade content and an upgrade parameter, the upgrade parameter comprises one or more of a physical addressing identifier ID, a functional addressing ID, a response ID, a burning key, and a CAN bus baud rate, and the upgrade content comprises one or more of project chip information, project code, and a vehicle model key.

3. The method according to claim 1 or 2, wherein the obtaining first upgrade process related information corresponding to the first vehicle model information from a set memory comprises:
obtaining, in a case that a current upgrade mode corresponds to a developer mode, the first upgrade process related information corresponding to the first vehicle model information stored in a local memory; and
obtaining, in a case that the current upgrade mode does not correspond to the developer mode, the first upgrade process related information corresponding to the first vehicle model information stored in a remote server,
wherein both the local memory and the remote server store a set mapping relationship between vehicle model information and upgrade process related information.

4. The method according to claim 3, before the obtaining the first upgrade process related information corresponding to the first vehicle model information stored in a local memory, the method further comprising:
obtaining, in a case that the current upgrade mode corresponds to the developer mode, the first vehicle model information in response to a selection operation corresponding to the first vehicle model information;
obtaining corresponding upgrade process related information in response to an operation for editing upgrade process related information; and
constructing a mapping relationship between the first vehicle model information and the obtained upgrade process related information, and storing the constructed mapping relationship into the local memory.

5. The method according to any one of claims 1 to 4, wherein the performing ECU upgrade processing on a vehicle having the first vehicle model information based on the first upgrade process related information and the first upgrade content related information comprises:
performing, in a case that the current upgrade mode corresponds to the developer mode, ECU upgrade processing on the vehicle having the first vehicle model information in combination with a set test abnormal situation and based on the first upgrade process related information and the first upgrade content related information.

6. The method according to claim 5, after the performing ECU upgrade processing on the vehicle having the first vehicle model information in combination with a set test abnormal situation, the method further comprising:
obtaining a first upgrade result;
determining whether the first upgrade result is the same as a set upgrade result corresponding to the test abnormal situation; and
saving, in a case that the first upgrade result is the same as the set upgrade result, the set mapping relationship stored in the local memory into the remote server.

7. The method according to claim 5 or 6, wherein the test abnormal situation comprises one or more of an abnormal packet, an error verification code, CAN bus high load, and continuous burning.

8. The method according to any one of claims 1 to 7, before the obtaining a set first encapsulation file, the method further comprising:
obtaining, in a case that the current upgrade mode corresponds to the developer mode, the first vehicle model information in response to the selection operation corresponding to the first vehicle model information;
obtaining the first upgrade content related information in response to an operation for editing upgrade content related information; and
encapsulating the first vehicle model information and the first upgrade content related information in response to a set encapsulation instruction corresponding to the first vehicle model information to obtain the first encapsulation file.

9. The method according to claim 8, after the obtaining the first upgrade content related information, the method further comprising:
storing a mapping relationship between the first vehicle model information and the first upgrade content related information into the remote server;
obtaining the first vehicle model information in response to the selection operation corresponding to the first vehicle model information;
obtaining the first upgrade content related information corresponding to the first vehicle model information from the remote server; and
performing the step of encapsulating the first vehicle model information and the first upgrade content related information in response to a set encapsulation instruction corresponding to the first vehicle model information to obtain the first encapsulation file based on the obtained first upgrade content related information.

10. An ECU upgrade apparatus (500), comprising a memory (520) and a processor (510), the memory (520) being configured to store a computer program; and the processor (510) being configured to execute the computer program to implement the method according to any one of claims 1 to 9.

11. An ECU upgrade system (600), comprising:
an upper computer (610), the upper computer comprising the ECU upgrade apparatus (500) according to claim 10; and
a vehicle (620), the vehicle comprising an ECU.

12. A computer-readable storage medium, the computer-readable storage medium storing a computer program, and when the computer program is executed by a processor, the method according to any one of claims 1 to 9 being implemented.
